# FASCICULE DE BREVET EUROPEEN

(11) **EP 1 544 031 B1**
(45) Date de publication et mention de la délivrance du brevet: **19.05.2010**
(21) Numéro de dépôt: 04292768.1
(22) Date de dépôt: 24.11.2004
(51) Int. Cl.: B60P 7/08

(54) **Dispositif de maintien en tension d'un lien souple**
Spannvorrichtung für Gurte
Tensioning device for straps

(30) Priorité: 15.12.2003 FR 0314669
(43) Date de publication de la demande: 22.06.2005
(73) Titulaire: Automaxi International, 35400 Saint Malo (FR)
(72) Inventeur: Deniaud, Mickael, 35400 Saint Malo (FR)
(74) Mandataire: Thinat, Michel

(56) Documents cités:
- DE-U- 29 808 346
- US-A- 5 402 557

## Description

L'invention concerne en général les dispositifs de maintien en tension de liens souples, notamment pour les dispositifs d'arrimage de charges sur les véhicules automobiles.

Un dispositif de ce type est défini dans DE 29808346 U.

Les dispositifs d'arrimage tels que les porte vélos comprennent en général des sangles de fixation équipées de boucles permettant de mettre ces sangles en tension.

Les mouvements du véhicule engendrent des chocs et des vibrations qui peuvent provoquer à la longue un glissement des sangles dans les boucles et un relâchement de la tension de ces sangles. Les charges retenues par les sangles peuvent alors ballotter et endommager la carrosserie du véhicule, et même, dans les cas extrêmes, se détacher.

Dans ce contexte, la présente invention a pour but de proposer un dispositif permettant de maintenir de telles sangles en tension sur une longue durée, en dépit des chocs et des vibrations.

A cette fin, le dispositif de maintien en tension d'un lien souple de forme allongée de l'invention est adapté pour être agencé sur un tronçon longitudinal dudit lien et conformer ce tronçon de telle sorte que celui-ci occupe une longueur longitudinale de repos quand le lien n'est pas sous tension, le dispositif coopérant avec le lien souple de telle sorte que la mise en tension du lien provoque un accroissement de la longueur longitudinale occupée par ledit tronçon par déformation élastique du dispositif de maintien, le dispositif de maintien étant agencé sur le lien par passage du tronçon dans ledit dispositif, et caractérisé en ce que il guide le tronçon selon un cheminement déterminé en le maintenant constamment tendu.

Dans un mode de réalisation possible de l'invention, le tronçon longitudinal du lien forme au moins un pli suivant une direction perpendiculaire à la direction longitudinale quand le dispositif est agencé sur ledit tronçon, ce pli présentant une hauteur de repos quand le lien n'est pas sous tension, la mise sous tension du lien provoquant une réduction de cette hauteur.

Le tronçon longitudinal du lien peut aussi former une pluralité de plis verticaux parallèles quand le dispositif est agencé sur ledit tronçon.

Avantageusement, le dispositif comprend deux éléments pivots de base alignés longitudinalement, et un élément pivot intermédiaire situé longitudinalement entre les éléments pivots de base et décalé verticalement par rapport à ceux-ci, l'élément pivot intermédiaire étant relié aux éléments pivots de base par des entretoises flexibles.

Le dispositif peut également comprendre une pluralité d'éléments pivots de base alignés longitudinalement, et une pluralité d'éléments pivots intermédiaires situés longitudinalement chacun entre deux éléments pivots de base et décalés verticalement par rapport à ceux-ci, chaque élément pivot intermédiaire étant relié aux deux éléments pivots de base contigus par des entretoises flexibles.

Alternativement, le dispositif peut comprendre deux plaques de base déformables élastiquement disposées mutuellement en regard, et au moins trois plots s'étendant suivant une direction transversale perpendiculaire aux directions longitudinale et verticale et reliant les deux plaques de base, ces plots étant au moins partiellement alignés longitudinalement au repos et présentant une section de grande taille relativement à l'épaisseur verticale du lien souple.

Selon un autre mode de réalisation de l'invention, le tronçon du lien souple forme au moins une spire enroulée autour d'un axe longitudinal quand le dispositif est agencé sur ledit tronçon, cette spire présentant un pas de repos quand le lien n'est pas sous tension, la mise sous tension du lien provoquant une augmentation de ce pas.

Dans ce cas, le dispositif comprend un manchon longitudinal déformable élastiquement suivant la direction longitudinale, sur lequel s'enroule le tronçon du lien.

En outre, le manchon est délimité par une face radiale et deux faces axiales opposées, le manchon comprenant deux lumières obliques mettant en communication les deux faces axiales opposées avec la face radiale.

De préférence, le lien peut être une sangle de faible épaisseur suivant la direction verticale, une plaque de faible épaisseur suivant la direction verticale, ou un fil.

Enfin, le dispositif est adapté pour être agencé sur deux tronçons longitudinaux superposés du lien souple.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective d'un premier mode de réalisation du dispositif selon l'invention,
- la figure 2 est une vue en perspective du dispositif de la figure 1, agencé sur le lien souple, au repos,
- la figure 3 est une vue en perspective du dispositif de la figure 1, agencé sur le lien souple, après mise en tension du lien,
- les figures 4 à 6 sont des vues équivalentes à celles des figures 1 à 3, pour un second mode de réalisation de l'invention,
- la figure 7 est une vue en perspective d'un troisième mode de réalisation du dispositif de la figure 1, agencé sur le lien souple, au repos,
- la figure 8 est une vue en coupe selon la ligne VIII de la figure 7,
- la figure 9 une vue en perspective d'une variante du dispositif de la figure 7,
- la figure 10 est une vue en coupe selon la ligne X de la figure 9,
- les figures 11 à 13 sont des vues équivalentes à celles des figures 1 à 3, pour un quatrième mode de réalisation de l'invention, et
- la figure 14 est une vue en perspective d'un porte vélos pour véhicule automobile, dont une des sangles est équipée d'un dispositif de maintien en tension selon l'invention.

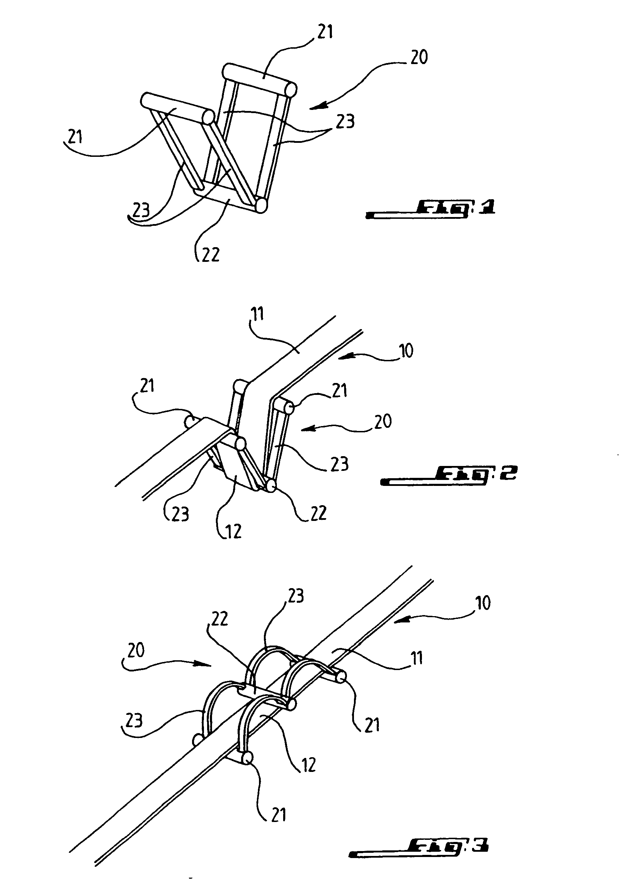

Le dispositif représenté sur les figures 1 à 14 a pour but de maintenir en tension un lien souple 10 de forme allongée, non élastique.

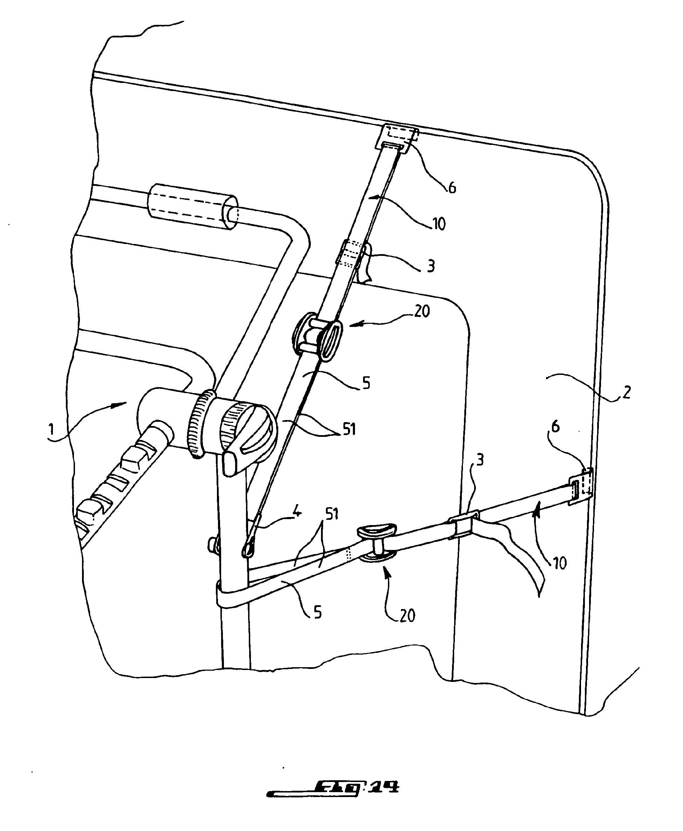

Comme le montre la figure 14, ce lien 10 est par exemple une sangle destinée à maintenir un cadre porte vélos 1 rigidement fixé sur le hayon arrière 2 d'un véhicule automobile. Une boucle de mise en tension 3 est montée à une première extrémité de ce lien, celui-ci étant ensuite passé dans un anneau 4 solidaire du cadre 1, et venant enfin s'engager dans une fente de passage de la boucle 3, de telle sorte que la partie du lien 10 la plus proche de la boucle 3 forme un collier fermé 5. On voit sur la figure 14 que le lien 10 peut également être passé autour d'un montant de cadre 1 et non dans un anneau 4.

Un crochet 6 est monté coulissant le long du collier 5 et est engagé dans la rainure qui entoure le hayon 2 et marque la solution de continuité entre ce hayon et le reste de la carrosserie. Le lien 10 est mis en tension en tirant sur son extrémité opposée à la boucle 3, ce qui a pour effet de faire coulisser le lien dans la fente de boucle 3 et de resserrer le collier 5 jusqu'à ce que ce collier soit tendu entre le crochet 6 et l'anneau 4. Un organe de blocage unidirectionnel monté sur la boucle 3 autorise le coulissement du lien 10 dans la fente dans le sens d'un resserrement du collier 5, et bloque le coulissement du lien 10 dans la fente dans le sens d'un desserrement du collier 5.

Bien entendu, le cadre 1 est arrimé sur le hayon 2 à l'aide de plusieurs liens de ce type s'étendant dans des directions opposées. Une fois la mise en tension des différents liens 10 effectuée, le cadre 1 est solidement arrimé au véhicule.

On notera que, après mise en tension, le collier 5 adopte une forme générale rectiligne du fait de la tension, présentant deux branches 51 parallèles et solidaires, s'étendant chacune entre le crochet 6 et l'anneau 4.

Le dispositif de maintien en tension 20 de l'invention est distinct de la boucle de mise en tension 3 et se monte sur le lien 10 en complément de cette boucle 3. Il vise à suppléer au glissement du lien 10 dans la fente de la boucle 3 dans le sens d'un desserrement du collier 5 qui peut se produire à la longue. A cet effet, il compense l'allongement de la longueur périphérique du collier 5 résultant du glissement, en provoquant un raccourcissement du collier pratiquement équivalent en un autre point.

Le dispositif de maintien 20 est adapté pour être agencé sur un tronçon longitudinal 11 dudit lien faisant partie du collier 5. En l'absence du dispositif 20 de maintien en tension, ce tronçon présente une forme rectiligne et une longueur longitudinale donnée dite intrinsèque.

Il résulte de l'agencement du dispositif 20 sur le tronçon 11 que celui-ci adopte une forme non rectiligne et occupe une longueur longitudinale de repos quand le lien 10 n'est pas sous tension. Cette longueur de repos est inférieure à la longueur intrinsèque du tronçon 11.

Par ailleurs, le dispositif 20 coopère avec le lien souple 10 de telle sorte que la mise en tension du lien 10 provoque un accroissement de la longueur longitudinale occupée par ledit tronçon 11 par déformation élastique du dispositif de maintien 20.

Ainsi, un glissement du lien 10 dans la fente de la boucle 3 va conduire à une réduction de la tension du lien dans le collier 5, cette réduction de la tension diminuant la déformation élastique du dispositif de maintien 20 et conduisant à une diminution de la longueur longitudinale occupé par le tronçon 11. L'élasticité du dispositif de maintien 20 est choisie de façon à ce que la diminution de longueur du tronçon 11 compense approximativement l'allongement du collier 5 dû au glissement du lien 10 dans la boucle. La tension du collier 5 reste donc sensiblement constante malgré le glissement.

Dans les modes de réalisation des figures 1 à 10, le tronçon longitudinal 11 du lien 10 forme, quand le dispositif de maintien en tension 20 est agencé sur ledit tronçon, au moins un pli 12 faisant saillie par rapport à la direction longitudinale suivant une direction verticale perpendiculaire à la direction longitudinale.

Ce pli 12 présente une hauteur verticale de repos quand le lien 10 n'est pas sous tension, la mise sous tension du lien 10 provoquant une réduction de cette hauteur.

Le pli 12 fait que la longueur longitudinale de repos du tronçon 11 est inférieure à sa longueur intrinsèque. Par ailleurs, on comprend bien que la réduction de hauteur du pli 12 résultant de la mise en tension du lien 10 conduit nécessairement à un allongement de la longueur longitudinale occupée par le tronçon 11.

Le premier mode de réalisation du dispositif de maintien en tension 20, représenté sur les figures 1 à 3, permet de réaliser un unique pli 12.

Ce dispositif est monobloc et comprend deux éléments pivots de base 21 alignés longitudinalement, et un élément pivot intermédiaire 22 situé longitudinalement entre les éléments pivots de base 21 et décalé verticalement d'un côté du tronçon 11 par rapport à ceux-ci.

Les éléments pivots de base 21 et l'élément intermédiaire 22 sont des barrettes cylindriques identiques, s'étendant suivant une direction transversale perpendiculaire aux directions longitudinale et transversale, et étant donc mutuellement parallèles. L'élément intermédiaire 22 est situé dans un plan transversal médian des deux éléments de base 21.

L'élément pivot intermédiaire 22 est relié aux éléments pivots de base 21 par des entretoises flexibles 23.

Ces entretoises 23 présentent la forme de barres inclinées, deux entretoises 23 parallèles reliant les extrémités transversales opposées de l'élément intermédiaire 22 aux extrémités transversales opposées de l'un des éléments de base 21, et deux autres entretoises 23 parallèles reliant les extrémités transversales opposées de l'élément intermédiaire 22 aux extrémités transversales opposées de l'autre élément de base 21. Les deux entretoises 23 forment avec l'élément de base 21 correspondant et l'élément intermédiaire 22 un parallélogramme.

Considéré suivant la direction transversale, le dispositif de maintien en tension 20 présente une forme en V, l'élément intermédiaire 22 occupant la pointe du V, les éléments de base 21 constituant ses extrémités libres, et les entretoises 23 constituant les deux bras du V.

La figure 2 représente la façon dont le dispositif de maintien en tension 20 est agencé sur le lien 10, ce lien n'étant pas encore mis en tension. On voit que le tronçon 11 s'étend d'abord longitudinalement, passe d'un côté du premier élément de base 21 opposé à l'élément intermédiaire 22, pivote autour de ce premier élément de base 21 et s'étend sensiblement entre les deux entretoises 23 jusqu'à l'élément intermédiaire 22, pivote autour de l'élément intermédiaire 22 d'un côté extérieur de celui-ci, c'est-à-dire opposé aux éléments de base 21, puis s'étend sensiblement entre les deux autres entretoises 23 jusqu'au second élément de base 21, pivote autour du second élément de base 21 en passant d'un côté de celui-ci opposé à l'élément intermédiaire 22, et enfin s'étend longitudinalement à partir du second élément de base 21, en s'éloignant du premier élément de base 21.

Le pli 12 est constitué par la partie du lien 10 allant du premier élément de base 21 à l'élément intermédiaire 22 et revenant vers le second élément de base 21.

Quand le lien 10 est mis en tension, on voit sur la figure 3 que l'élément intermédiaire 22 se rapproche suivant la direction verticale des deux éléments de base 21, et que les entretoises 23 se courbent du fait du déplacement de l'élément intermédiaire 22 et présentent une concavité tournée vers le lien 10. La figure 3 représente une situation extrême, dans laquelle la tension du lien est très forte, l'élément intermédiaire 22 venant alors se placer exactement dans le même plan les deux éléments de base 21. Le pli 12 est pratiquement totalement aplati et le tronçon 11 s'étend pratiquement de façon rectiligne suivant la direction longitudinale.

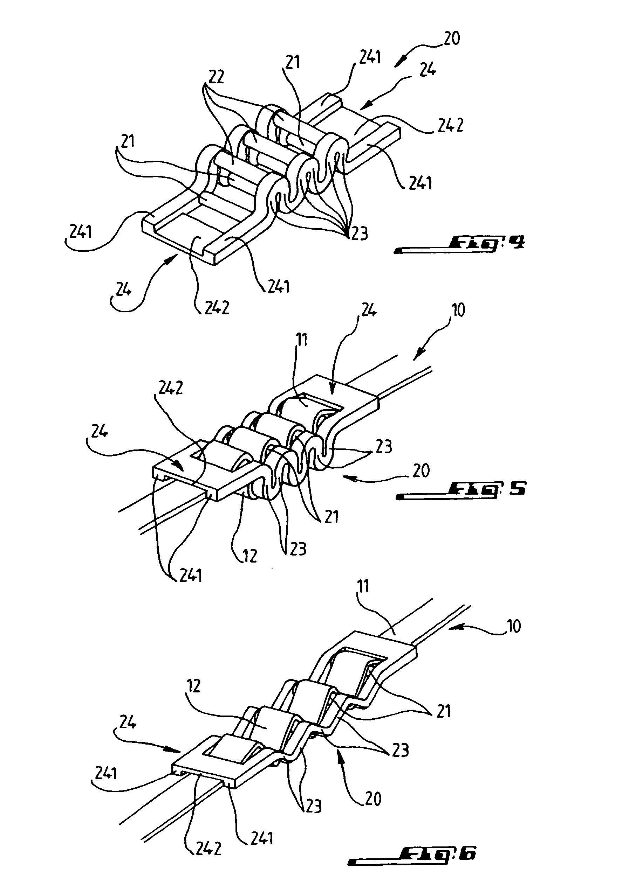

Les figures 4 à 6 représentent un second mode de réalisation de l'invention, dans lequel le tronçon longitudinal 11 du lien 10 forme une pluralité de plis 12 verticaux parallèles quand le dispositif 20 est agencé sur ledit tronçon 11. Ces plis 12 sont espacés longitudinalement le long du tronçon 11.

Le dispositif de maintien en tension 20 comprend dans ce cas une pluralité d'éléments pivots de base 21 alignés longitudinalement, et une pluralité d'éléments pivots intermédiaires 22 situés longitudinalement chacun entre deux éléments pivots de base 21 et décalés verticalement par rapport à ceux-ci. Les éléments pivots intermédiaires 22 sont alignés suivant la direction longitudinale.

Les éléments de base 21 et les éléments intermédiaires 22 sont des barrettes identiques à celles du premier mode de réalisation, mutuellement parallèles, s'étendant toutes transversalement. Les éléments de base 21 sont régulièrement espacés longitudinalement, de même que les éléments intermédiaires 22. Chaque élément intermédiaire 22 s'étend dans un plan transversal médian de deux éléments de base 21. Le dispositif de maintien en tension comprend donc un nombre d'élément intermédiaire 22 inférieur d'une unité au nombre d'élément de base 21.

Le dispositif comprend typiquement quatre éléments de base 21, et trois éléments intermédiaires 22.

Chaque élément pivot intermédiaire 22 est relié aux deux éléments pivots de base 21 contigus entre lesquels il est situé par des entretoises flexibles 23 présentant chacune une forme en S.

Comme dans le premier mode de réalisation, deux entretoises 23 parallèles relient les extrémités transversales opposées de l'élément intermédiaire 22 aux extrémités transversales opposées d'un élément de base 21, et deux autres entretoises 23 parallèles relient les extrémités transversales opposées de l'élément intermédiaire 22 aux extrémités transversales opposées de l'autre élément de base 21.

Les deux entretoises en S 23 solidaires d'une même extrémité de l'élément intermédiaire 22 et liant celle-ci aux deux éléments de base 21 sont orientés en sens opposés, de telle sorte que, considéré suivant une direction transversale, ces deux entretoises 23 dessinent approximativement un Q.

Les entretoises 23 situées d'un même côté transversal des éléments de base 21 et des éléments intermédiaires 22 sont agencées dans le prolongement les unes des autres et dessinent, considérées transversalement, une série de vagues.

Enfin, le dispositif de maintien en tension 20 comprend deux organes 24 de guidage du tronçon 11, disposés dans le même plan que les éléments de base 21, de part et d'autre de ces éléments suivant la direction longitudinale.

Chaque organe de guidage 24 comprend deux bords latéraux opposés 241 parallèles, s'étendant longitudinalement dans le prolongement des entretoises 23, et un voile de support 242 s'étendant transversalement entre les deux bords opposés 242.

La figure 4 représente la façon dont le dispositif de maintien en tension 20 est agencé sur le lien 10, ce lien n'étant pas encore mis en tension. On voit que chaque ensemble constitué d'une paire d'éléments de base 21 contigus et de l'élément intermédiaire 22 correspondant fonctionne comme le dispositif de maintien en tension du premier mode de réalisation. Le lien 10 est donc agencé par rapport à ces éléments de la même façon que ce qui a été décrit ci-dessus.

On voit également que le tronçon 11 s'étend d'abord longitudinalement sur le voile 242 d'un premier organe de guidage 24, entre les deux bords latéraux 241, puis serpente autour des éléments de base 21 et des éléments intermédiaires 22, avant de passer sur le voile 242 du second élément de guidage 24.

Les plis 12 sont constitués par les parties du lien 10 serpentant entre chaque paire d'éléments de base 21 contigus.

Quand le lien 10 est mis en tension, on voit sur la figure 6 que les éléments intermédiaires 22 se rapprochent suivant la direction verticale des éléments de base 21, que les entretoises 23 tendent à adopter une forme linéaire du fait du déplacement de l'élément intermédiaire 22 et que les éléments de base 21 s'écartent les uns des autres suivant une direction longitudinale.

On notera que le déplacement vertical des éléments intermédiaires 22 est plus court que dans le premier mode de réalisation.

Ceci est dû à la forme des entretoises et au fait que le dispositif de maintien 20 comprend plusieurs éléments intermédiaires 22, le déplacement de chacun d'eux permettant d'absorber une fraction de la tension du lien 10.

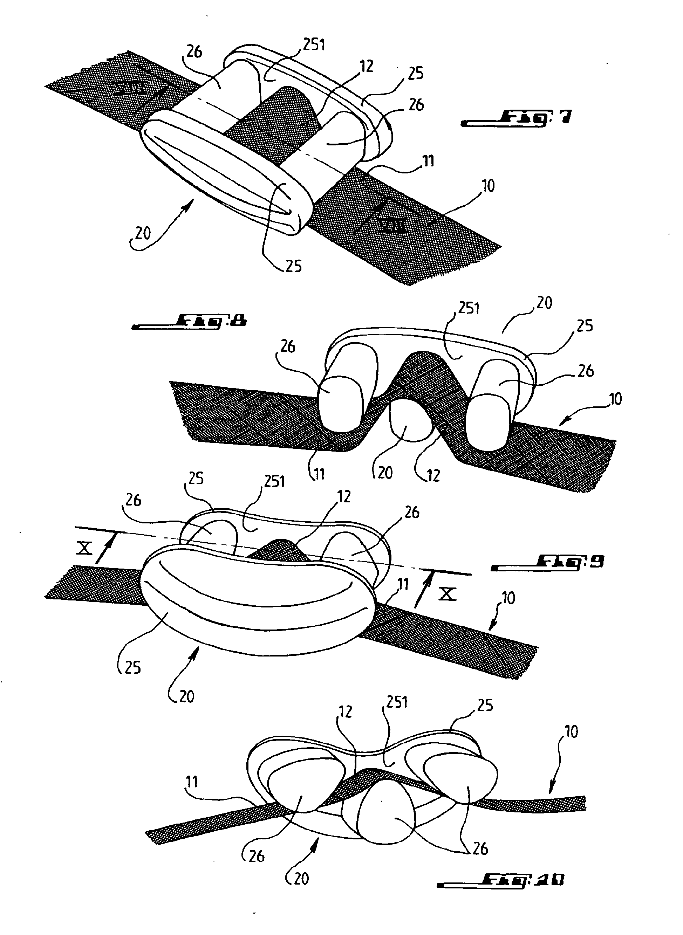

Les figures 7 à 10 illustrent un troisième mode de réalisation de l'invention permettant également de former un pli 12 dans le tronçon 11.

Le dispositif comprend deux plaques de base 25 déformables élastiquement, espacées transversalement et disposées mutuellement en regard, et au moins trois plots 26 s'étendant suivant une direction transversale et reliant les deux plaques de base 25.

Les plots 26 présentent une section approximativement circulaire ou ovoïde dans un plan perpendiculaire à la direction transversale, de grande taille relativement à l'épaisseur verticale du lien souple.

Les plots 26 sont alignés longitudinalement sur au moins une fraction importante de leur épaisseur verticale.

Les plaques de base 25 présentent chacune une face plane 251 faisant face à la plaque opposée, les plots 26 faisant saillie sur ces faces 251.

On voit sur les figures 7 à 10 que le dispositif de maintien en tension 20 est agencé sur le tronçon 11 de telle sorte que le lien 10 passe d'un côté vertical inférieur d'un premier plot 26 situé à une extrémité longitudinale de l'alignement de trois plots 26, puis entre ledit premier plot 26 et le second plot 26 situé au centre de l'alignement, d'un côté vertical supérieur du second plot central 26, entre ce second plot central 26 et le troisième plot 26 situé à l'extrémité opposée de l'alignement et enfin d'un côté vertical inférieur de ce troisième plot 26 .

Le pli 12 est formé par la portion du tronçon 11 s'étendant entre les deux plots 26 extrêmes de l'alignement.

Quand le lien 10 est mis en tension, les plaques de base 25 se déforment de telle sorte que le plot 26 central se déplace selon la direction verticale du côté inférieur, et que les deux plots 26 extrêmes se déplacent selon la direction verticale du côté supérieur.

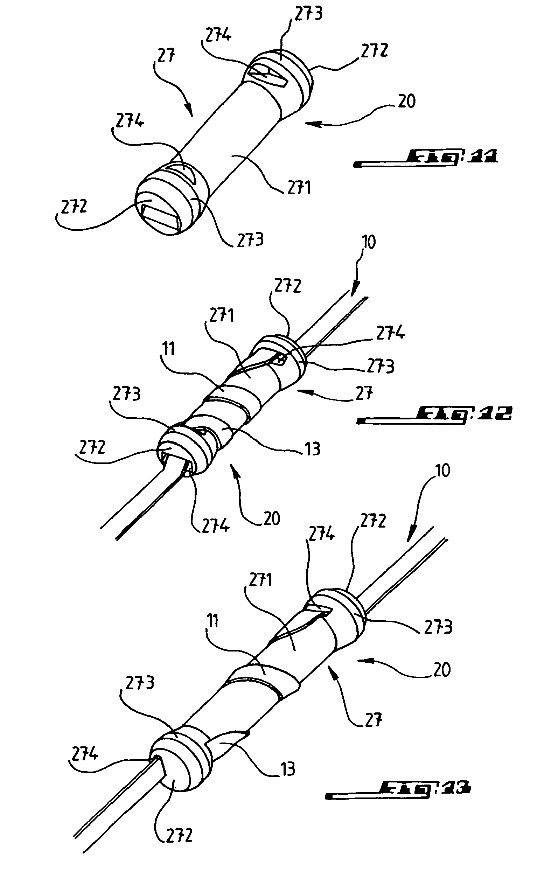

Les figures 11 à 13 illustrent un quatrième mode de réalisation de l'invention, selon lequel le tronçon 11 du lien souple forme au moins une spire 13 enroulée autour d'un axe longitudinal quand le dispositif de maintien en tension 20 est agencé sur ledit tronçon 11.

Cette spire 13 présente un pas de repos quand le lien 10 n'est pas sous tension, la mise sous tension du lien 10 provoquant une augmentation de ce pas.

On définit ici le pas d'une spire comme étant l'écartement longitudinal séparant deux extrémités de cette spire, ces extrémités étant décalées angulairement de 360°.

Le tronçon 11 forme de préférence au moins une spire 13 complète, mais peut également former une fraction de spire s'étendant sur une plage angulaire de moins de 360°.

Le dispositif de maintien en tension 20 comprend dans ce but un manchon longitudinal 27 déformable élastiquement au moins suivant la direction longitudinale, sur lequel s'enroule le tronçon 11 du lien 10.

Ce manchon 27 est délimité par une face radiale 271 et deux faces axiales 272 opposées. La face radiale 271 présente une forme sensiblement cylindrique, d'axe de symétrie longitudinal, et forme à ses deux extrémités longitudinales opposées deux renflements annulaires 273 faisant saillie radialement vers l'extérieur du manchon.

Les deux faces axiales 272 sont rondes et s'étendent dans des plans respectifs mutuellement parallèles et perpendiculaires à la direction longitudinale.

Le manchon 27 comprend enfin deux lumières obliques 274 mettant en communication les deux faces axiales 272 opposées avec la face radiale 271.

Ces lumières 274 sont ménagées aux deux extrémités longitudinales opposées du manchon 27, chacune débouchant d'un côté sur la face axiale 272 correspondante et de l'autre côté sur un côté du renflement 273 opposé à ladite face axiale.

Comme on le voit sur la figure 12, le dispositif de maintien en tension 20 est agencé sur le tronçon 11 de façon à ce que le lien 10 s'étende d'abord longitudinalement jusqu'à une face axiale 272 du manchon 27, s'engage dans la lumière 274 débouchant sur cette face, ressorte sur la face radiale 271, à une première extrémité longitudinale du manchon 27, s'enroule autour de cette face radiale 271 en formant deux spires complètes jusqu'à la lumière 274 située à la seconde extrémité longitudinale du manchon 27, s'engage dans cette lumière 274 par son côté s'ouvrant dans la face radiale 271 et ressorte par le côté débouchant sur la face axiale 272 correspondante, et enfin s'étende longitudinalement à partir de ladite face axiale 272.

On voit sur la figure 13 que, quand le lien 10 est mis sous tension, le manchon 27 s'allonge longitudinalement ce qui provoque un allongement des spires 13. Par ailleurs, le manchon 27 subit également une torsion autour d'un axe longitudinal, de telle sorte que le lien ne constitue plus deux spires complètes sur la paroi radiale 271 entre les deux lumières 274.

L'invention s'applique à de multiples types de liens 10. Ce lien peut être une sangle présentant une épaisseur réduite suivant la direction verticale et une largeur transversale importante relativement à son épaisseur, une plaque présentant une épaisseur réduite suivant la direction verticale et une largeur transversale importante relativement à son épaisseur, ou un fil. Ce fil peut être constitué de un ou plusieurs brins. La plaque peut être par exemple constituée de métal ou de matière plastique.

Par ailleurs, ce lien peut être ou non déformable élastiquement suivant une direction longitudinale.

Ce lien est typiquement la sangle de fixation d'un équipement sur un véhicule automobile. Cet équipement peut être un porte vélos de toit, un porte vélo arrière, un porte vélos sur attelage, une galerie, un coffre de toit. Le lien peut aussi servir à fixer une charge sur un accessoire de portage, par exemple sur une barre de toit longitudinale, sur une barre de toit transversale, sur un porte vélos, ou sur une galerie.

Toutefois, le dispositif de maintien en tension peut être employé dans d'autres domaines sans sortir du cadre de l'invention, par exemple sur des bateaux, à chaque fois qu'on cherche à maintenir une tension constante dans un câble ou une sangle.

Son utilisation n'est pas limitée à la fixation d'une charge sur un support.

On comprend donc bien que le dispositif de maintien en tension décrit ci-dessus présente de multiples avantages.

Il permet de maintenir constante la tension d'un lien, par exemple une sangle de fixation d'un porte vélo sur un véhicule, même si les chocs et les vibrations au cours du trajet du véhicule entraînent un léger desserrement de ces sangles.

I1 est généralement réalisé en matière plastique moulée, et est donc peu coûteux et léger. Il présente de petites dimensions et peut donc s'adapter sur tous types de matériels. Il est facile à mettre en place.

Enfin, on notera qu'il est possible, dans le cas où le collier 5 est conformé en deux branches 51 plaquées l'une contre l'autre après mise en tension, d'engager les deux branches 51 dans le dispositif de maintien en tension.

Plus généralement, on comprend bien qu'il est possible d'agencer le dispositif de maintien en tension sur deux tronçons longitudinaux 11 superposés du lien 10, les deux tronçons étant plaqués l'un sur l'autre et engagés parallèlement dans le dispositif.

Selon un autre aspect particulièrement avantageux, le dispositif de maintien est agencé sur le lien en guidant le tronçon 11 selon un cheminement déterminé le long duquel le tronçon est maintenu constamment tendu. Cela est clairement visible sur les figures 2, 3, 5, 6, 7 à 10, 12 et 13.

Le tronçon 11 est maintenu tendu le long du cheminement déterminé quand le lien 10 est mis sous tension initialement, et reste tendu le long de ce chemin quand la tension du lien 10 se relâche partiellement à cause des chocs et des vibrations.

La position du tronçon 11 est ainsi parfaitement maîtrisée en permanence, ce tronçon ne « flottant » pas de manière aléatoire et ne pouvant donc pas s'accrocher dans un élément d'un vélo ou dans un élément extérieur au porte-vélo.

## Revendications

1. Dispositif de maintien en tension d'un lien souple (10) de forme allongée, ce dispositif étant adapté pour être agencé de façon amovible sur un tronçon longitudinal (11) dudit lien et conformer ce tronçon (11) de telle sorte que celui-ci occupe une longueur longitudinale de repos quand le lien n'est pas sous tension, le dispositif coopérant avec le lien souple (10) de telle sorte que la mise sous tension du lien provoque un accroissement de la longueur longitudinale occupée par ledit tronçon (11) par déformation élastique dudit dispositif de maintien, (20), le dispositif de maintien étant agencé sur le lien par passage du tronçon (11) dans ledit dispositif, et **caractérisé en ce que** il guide le tronçon (11) selon un cheminement déterminé en le maintenant constamment tendu.

2. Dispositif selon la revendication 1, **caractérisé en ce que** le tronçon longitudinal (11) du lien forme au moins un pli (12) suivant une direction perpendiculaire à la direction longitudinale quand le dispositif est agencé sur ledit tronçon (11), ce pli (12) présentant une hauteur de repos quand le lien (10) n'est pas sous tension, la mise sous tension du lien (10) provoquant une réduction de cette hauteur .

3. Dispositif selon la revendication 2, **caractérisé en ce que** le tronçon longitudinal (11) du lien forme une pluralité de plis (12) verticaux parallèles quand le dispositif est agencé sur ledit tronçon (11).

4. Dispositif selon la revendication 2 ou 3,
**caractérisé en ce qu'**il comprend deux éléments pivots de base (21) alignés longitudinalement, et un élément pivot intermédiaire (22) situé longitudinalement entre les éléments pivots de base (21) et décalé verticalement par rapport à ceux-ci, l'élément pivot intermédiaire (22) étant relié aux éléments pivots de base (21) par des entretoises flexibles (23).

5. Dispositif selon la revendication 3, **caractérisé en ce qu'**il comprend une pluralité d'éléments pivots de base (21) alignés longitudinalement, et une pluralité d'éléments pivots intermédiaires (22) situés longitudinalement chacun entre deux éléments pivots de base (21) et décalés verticalement par rapport à ceux-ci, chaque élément pivot intermédiaire (22) étant relié aux deux éléments pivots de base (21) contigus par des entretoises flexibles (23).

6. Dispositif selon la revendication 2 ou 3,
**caractérisé en ce qu'**il comprend deux plaques de base (25) déformables élastiquement disposées mutuellement en regard, et au moins trois plots (26) s'étendant suivant une direction transversale perpendiculaire aux directions longitudinale et verticale et reliant les deux plaques de base (25), ces plots (26) étant au moins partiellement alignés longitudinalement au repos et présentant une section de grande taille relativement à l'épaisseur verticale du lien souple (10).

7. Dispositif selon la revendication 1, **caractérisé en ce que** le tronçon (11) du lien souple (10) forme au moins une spire (13) enroulée autour d'un axe longitudinal quand le dispositif (20) est agencé sur ledit tronçon, cette spire (13) présentant un pas de repos quand le lien (10) n'est pas sous tension, la mise sous tension du lien provoquant une augmentation de ce pas.

8. Dispositif selon la revendication 7, **caractérisé en ce qu'**il comprend un manchon longitudinal (27) déformable élastiquement suivant la direction longitudinale, sur lequel s'enroule le tronçon (11) du lien (10).

9. Dispositif selon la revendication 8, **caractérisé en ce que** le manchon (27) est délimité par une face radiale (271) et deux faces axiales opposées (272), le manchon (27) comprenant deux lumières obliques (274) mettant en communication les deux faces axiales opposées (272) avec la face radiale (271).

10. Dispositif selon l'une quelconque des revendications précédentes, **caractérisé en ce que** le lien (10) est une sangle de faible épaisseur suivant la direction verticale, une plaque de faible épaisseur suivant la direction verticale, ou un fil.

11. Dispositif selon l'une quelconque des revendications précédentes, **caractérisé en ce qu'**il est adapté pour être agencé sur deux tronçons longitudinaux superposés du lien souple (10).

## Claims

1. A device for maintaining tension on an elongated pliable link (10), wherein the device is adapted to be removably arranged on a longitudinal section (11) of said link and to shape the section (11) so that it occupies a longitudinal neutral length when the link is not tensioned, the device cooperating with the pliable link (10) so that the tension of the link causes an increase of the longitudinal length occupied by said section (11) due to elastic deformation of the maintaining device (20), wherein the maintaining device is arranged on the link by passing the section (11) through said device, and **characterized in that** it guides the section (11) on a determined route while constantly tensioning the same.

2. The device according to claim 1, **characterized in that** the longitudinal section (11) of the link forms at least one fold (12) in a direction, which is perpendicular to the longitudinal direction, when the device is arranged on said section (11), wherein the fold (12) has a neutral height when the link (10) is not tensioned, with tensioning the link (10) causing the height to reduce.

3. The device according to claim 2, **characterized in that** the longitudinal section (11) of the link forms a plurality of parallel vertical folds (12) when the device is arranged on said section (11).

4. The device according to claim 2 or 3,
**characterized in that** it comprises two longitudinally aligned base pivot members (21), and an intermediate pivot member (22) situated longitudinally between the base pivot members (21) and vertically offset with respect thereto, the intermediate pivot member (22) being connected with the base pivot members (21) via flexible webs (23).

5. The device according to claim 3, **characterized in that** it comprises a plurality of longitudinally aligned base pivot members (21), and a plurality of intermediate pivot members (22), respectively situated longitudinally between two base pivot members (21) and vertically offset with respect thereto, each intermediate pivot member (22) being connected with both base pivot members (21) adjacent via flexible webs (23).

6. The device according to claim 2 or 3,
**characterized in that** it comprises two elastically deformable base plates (25), which are arranged opposite each other, and at least three studs (26) extending in a transverse direction, which is perpendicular to the longitudinal and vertical directions, and connecting both base plates (25), wherein the studs (26) are at least partially longitudinally aligned in the neutral position and have a relatively large section with respect to the vertical thickness of the pliable link (10).

7. The device according to claim 1, **characterized in that** the section (11) of the pliable link (10) forms at least one turn (13) wound around a longitudinal axis when the device (20) is arranged on said section, wherein the turn (13) has a neutral pitch when the link (10) is not tensioned, with tensioning of the link causing the pitch to increase.

8. The device according to claim 7, **characterized in that** it comprises a longitudinal sleeve (27), which is elastically deformable in the longitudinal direction, in which said section (11) of the link (10) is wound up.

9. The device according to claim 8, **characterized in that** the sleeve (27) is defined by one radial side (271) and two opposite axial sides (272), the sleeve (27) comprising two slanting lumens (274) communicating both opposite axial sides (272) with the radial side (271).

10. The device according to any of the preceding claims, **characterized in that** the link (10) is a strap having reduced thickness in the vertical direction, a plate having reduced thickness in the vertical direction, or a wire.

11. The device according to any of the preceding claims, **characterized in that** it is adapted to be arranged on two overlapping longitudinal sections of the pliable link (10).

## Patentansprüche

1. Vorrichtung zum Beibehalten der Spannung eines länglichen biegsamen Bindeglieds (10), wobei diese Vorrichtung dazu geeignet ist, um abnehmbar auf einem Längsabschnitt (11) des Bindeglieds angeordnet zu werden und diesen Abschnitt (11) derart anzupassen, dass er eine längsseitige Ruhelänge einnimmt, wenn das Bindeglied nicht gespannt ist, wobei die Vorrichtung mit dem biegsamen Bindeglied (10) derart zusammenwirkt, dass die Spannung des Bindeglieds eine Vergrößerung der längsseitigen Länge, die von dem Abschnitt (11) eingenommen wird, durch elastische Verformung der Haltevorrichtung (20) hervorruft, wobei die Haltevorrichtung auf dem Bindeglied durch das Durchführen des Abschnitts (11) durch die Vorrichtung angeordnet wird, und **dadurch gekennzeichnet, dass** sie den Abschnitt (11) auf einem bestimmten Weg führt und ihn dabei ständig gespannt hält.

2. Vorrichtung nach Anspruch 1, **dadurch gekennzeichnet, dass** der längsseitige Abschnitt (11) des Bindeglieds in einer Richtung, die zur Längsrichtung rechtwinklig ist, wenn die Vorrichtung auf dem Abschnitt (11) angeordnet ist, mindestens eine Faltung (12) bildet, wobei diese Faltung (12) eine Ruhehöhe aufweist, wenn das Bindeglied (10) nicht gespannt ist, wobei die Spannung des Bindeglieds (10) eine Reduzierung dieser Höhe hervorruft.

3. Vorrichtung nach Anspruch 2, **dadurch gekennzeichnet, dass** der Längsabschnitt (11) des Bindeglieds eine Vielzahl von parallelen senkrechten Faltungen (12) bildet, wenn die Vorrichtung auf dem Abschnitt (11) angeordnet ist.

4. Vorrichtung nach Anspruch 2 oder 3, **dadurch gekennzeichnet, dass** sie zwei Basisdrehpunktelemente (21), die längsseitig ausgerichtet sind, und ein Zwischendrehpunktelement (22), das längsseitig zwischen den Basisdrehpunktelementen (21) liegt und im Verhältnis dazu senkrecht versetzt ist, umfasst, wobei das Zwischendrehpunktelement (22) mit den Basisdrehpunktelementen (21) über flexible Stege (23) verbunden ist.

5. Vorrichtung nach Anspruch 3, **dadurch gekennzeichnet, dass** sie eine Vielzahl von Basisdrehpunktelementen (21), die längsseitig ausgerichtet sind, und eine Vielzahl von Zwischendrehpunktelementen (22), die jeweils längsseitig zwischen zwei Basisdrehpunktelementen (21) liegen und im Verhältnis dazu senkrecht versetzt sind, umfasst, wobei jedes Zwischendrehpunktelement (22) mit den beiden Basisdrehpunktelementen (21) verbunden ist, die über flexible Stege (23) aneinandergrenzen.

6. Vorrichtung nach Anspruch 2 oder 3, **dadurch gekennzeichnet, dass** sie zwei elastisch verformbare Basisplättchen (25), die einander gegenüber angeordnet sind, und mindestens drei Stifte (26), die sich in einer Querrichtung erstrecken, die zu den längsseitigen und senkrechten Richtungen rechtwinklig ist, und die beiden Basisplättchen (25) verbinden, umfasst, wobei diese Stifte (26) im Ruhezustand mindestens teilweise längsseitig ausgerichtet sind und einen im Verhältnis zur senkrechten Dicke des biegsamen Bindeglieds (10) relativ großen Querschnitt aufweisen.

7. Vorrichtung nach Anspruch 1, **dadurch gekennzeichnet, dass** der Abschnitt (11) des biegsamen Bindeglieds (10) mindestens eine Windung (13) bildet, die um eine Längsachse herum gewickelt ist, wenn die Vorrichtung (20) auf dem Abschnitt angeordnet ist, wobei diese Windung (13) einen Ruheabstand aufweist, wenn das Bindeglied (10) nicht gespannt ist, wobei das Spannen des Bindeglieds eine Vergrößerung dieses Abstands hervorruft.

8. Vorrichtung nach Anspruch 7, **dadurch gekennzeichnet, dass** sie eine Längsmuffe (27) umfasst, die in der Längsrichtung, in der sich der Abschnitt (11) des Bindeglieds (10) aufrollt, elastisch verformbar ist.

9. Vorrichtung nach Anspruch 8, **dadurch gekennzeichnet, dass** die Muffe (27) von einer Radialseite (271) und zwei gegenüberliegenden Axialseiten (272) begrenzt ist, wobei die Muffe (27) zwei schräge Öffnungen (274) umfasst, welche die beiden gegenüberliegenden Axialseiten (272) mit der Radialseite (271) in Verbindung setzen.

10. Vorrichtung nach einem der vorhergehenden Ansprüche, **dadurch gekennzeichnet, dass** das Bindeglied (10) ein Gurt, der in der senkrechten Richtung eine geringe Dicke aufweist, ein Plättchen, das in der senkrechten Richtung eine geringe Dicke aufweist, oder ein Draht ist.

11. Vorrichtung nach einem der vorhergehenden Ansprüche, **dadurch gekennzeichnet, dass** sie dazu geeignet ist, auf zwei übereinander liegenden Längsabschnitten des biegsamen Bindeglieds (10) angeordnet zu sein.
